# EUROPEAN PATENT SPECIFICATION

(11) **EP 3 797 649 B1**
(45) Date of publication and mention of the grant of the patent: **08.11.2023**
(21) Application number: 20824056.4
(22) Date of filing: 18.06.2020
(51) Int. Cl.: A47D 9/00

(54) **QUICK-COLLAPSE CRIB FRAME**
SCHNELL ZUSAMMENKLAPPBARES GITTERBETTGESTELL
CADRE DE BERCEAU À PLIAGE RAPIDE

(30) Priority: 04.07.2019 CN 201910598555
(43) Date of publication of application: 31.03.2021
(73) Proprietor: Anhui Coolbaby Science & Technology Development Corporation, Jin'an District Lu'an Anhui 237005 (CN)
(72) Inventor: ZHANG, Yingnian, Anhui 237005 (CN); ZHAO, Jianwei, Anhui 237005 (CN); LIU, Hongbing, Anhui 237005 (CN)
(74) Representative: Bryn Aarflot AS
(86) International application number: PCT/CN2020/096870
(87) International publication number: WO 2021/000744

(56) References cited:
- CN-A- 108 260 998
- CN-A- 110 338 595
- CN-U- 204 048 902
- CN-U- 205 018 659
- CN-U- 205 963 565
- CN-U- 207 561 646
- CN-U- 207 886 020
- CN-U- 208 740 453
- US-A- 5 193 234

## Description

### Cross-Reference to Related Application

The present disclosure claims priority to Chinese Patent Application No. 201910598555.3, filed with the Chinese Patent Office on July 4, 2019, entitled "Quickly Foldable Crib Frame".

### Technical Field

The present disclosure relates to the technical field of cribs (or baby beds), and in particular to a quickly foldable crib frame.

### Background Art

With the development of technology, cribs come in various styles, and their functions and prices also vary greatly. A current crib mainly comprises a bed frame and a bed enclosure, wherein the bed frame is configured to support the bed enclosure, and a baby can rest within the range of the bed enclosure.

The inventors have found in researches that the conventional cribs have at least the following shortcomings:
The bed frame and the bed surrounding frame cannot be folded and therefore occupy large space and are carried and moved inconveniently.

CN 204 048 902 U discloses a quickly foldable crib frame known in the art.

### Summary

In order to solve the drawbacks of the prior art technical solutions, the present disclosure provides a quickly foldable crib frame.

According to the invention, the present disclosure provides a quickly foldable crib frame, comprising: a first U-shaped surrounding frame and a second U-shaped surrounding frame, wherein first surrounding frame connectors and second surrounding frame connectors integrally formed are arranged at tail ends on both sides of the first U-shaped surrounding frame and the second U-shaped surrounding frame, respectively, the first surrounding frame connector and the second surrounding frame connector on each of both sides are rotatably riveted to an upper vertical rod connector, respectively, wherein the upper vertical rod connector is fixedly sleeved on a top end of an upper vertical rod, a bottom end of the upper vertical rod is slidably inserted in an inner cavity of a lower vertical rod, a bottom end of the lower vertical rod is fixedly inserted in a rotating base, one end of a first bottom horizontal brace rod and one end of a second bottom horizontal brace rod are rotatably riveted to the two, front and rear, sides of the rotating base, respectively, one end of a first bottom horizontal brace linkage and one end of a second bottom horizontal brace linkage are rotatably riveted to inner walls of the first bottom horizontal brace rod and the second bottom horizontal brace rod, respectively, a sliding sleeve is slidably sleeved on the lower vertical rod, and both the other end of the first bottom horizontal brace linkage and the other end of the second bottom horizontal brace linkage are rotatably riveted to the sliding sleeve.

Optionally, the quickly foldable crib frame comprises a riveting pin and a plug-in lock block, wherein both the first surrounding frame connector and the second surrounding frame connector are rotatably connected to the upper vertical rod connector by means of the riveting pin, and the plug-in lock block is separably fitted to the riveting pin, so as to be switched between a first state and a second state;
in the first state, the plug-in lock block locks the riveting pin such that the first surrounding frame connector, the second surrounding frame connector, and the upper vertical rod connector are fixed relative to one another;
in the second state, the plug-in lock block is separated from the riveting pin such that the first surrounding frame connector and the second surrounding frame connector are rotatable relative to the upper vertical rod connector.

Optionally, the quickly foldable crib frame further comprises a first locking lug, wherein the first locking lug is arranged at the top end of the upper vertical rod, the first locking lug has a guiding space through which one end of the plug-in lock block passes, and the plug-in lock block is engaged with the first locking lug and thus locked by the first locking lug in the first state.

Optionally, a side wall of the upper vertical rod is provided with an elastic locking protrusion, a side wall of the lower vertical rod is provided with a locking hole communicating with the inner cavity of the lower vertical rod, and the elastic locking protrusion can be locked by the locking hole, so as to be switched between a third state and a fourth state;
in the third state, the elastic locking protrusion is fitted into (cooperates with) the locking hole such that the upper vertical rod is fixed relative to the lower vertical rod;
in the fourth state, the elastic locking protrusion is disengaged from the locking hole such that the upper vertical rod is slidable in the inner cavity of the lower vertical rod.

Optionally, a plurality of locking holes are provided, the plurality of locking holes are arranged spaced apart from one another in a length direction of the lower vertical rod, and the elastic locking protrusion is configured to be fitted into the different locking holes to change a length of extension of the upper vertical rod from the inner cavity of the lower vertical rod.

Optionally, the quickly foldable crib frame further comprises a sliding sleeve connecting tube, a sliding sleeve locking member, and a rotating pin, wherein the sliding sleeve connecting tube has an end connected to the sliding sleeve, and the sliding sleeve locking member is slidably inserted in the sliding sleeve connecting tube so that one end of the sliding sleeve locking member can extend from the sliding sleeve connecting tube and pass through the sliding sleeve to abut against the lower vertical rod;
the sliding sleeve connecting tube is provided with a through hole, and the rotating pin passes through the through hole and abuts against the sliding sleeve locking member so that the sliding sleeve connecting tube and the sliding sleeve locking member are fixed relative to each other, whereby the sliding sleeve is fixed to the lower vertical rod.

Optionally, two lower vertical rods are provided, the two lower vertical rods are arranged spaced apart from each other, and the two ends of the sliding sleeve connecting tube are connected to the sliding sleeves sleeved on the two lower vertical rods, respectively;
two sliding sleeve locking members are provided, the two sliding sleeve locking members are arranged spaced apart from each other in the sliding sleeve connecting tube, one of the sliding sleeve locking members abuts against one of the lower vertical rods, and the other one of the sliding sleeve locking members abuts against the other one of the lower vertical rods.

Optionally, an outer wall of the sliding sleeve connecting tube is provided with sliding slots communicating with an inner cavity of the sliding sleeve connecting tube, each of the two sliding sleeve locking members is provided with a sliding protrusion at its end close to the sliding slot, and the two sliding protrusions are slidably engaged in the sliding slots so that the two sliding sleeve locking members are moved close to or away from each other.

Optionally, the quickly foldable crib frame further comprises a sliding sleeve unlocking member, wherein the sliding sleeve unlocking member is rotatably sleeved on the sliding sleeve connecting tube, the sliding sleeve unlocking member is provided with a first slot segment and a second slot segment, the first slot segment and the second slot segment communicate with each other to form a trapezoidal slot, and the first slot segment and the second slot segment are fitted with the two sliding protrusions at different time so that the two sliding sleeve locking members are moved close to or away from each other;
the sliding sleeve unlocking member is configured to drive the two sliding protrusions to slide from the first slot segment to the second slot segment or from the second slot segment to the first slot segment when rotating relative to the sliding sleeve connecting tube.

Optionally, an integrally formed second locking lug is arranged on an inner wall of the top end of the lower vertical rod, an integrally formed unlocking insert is arranged on a side wall of the sliding sleeve, and the unlocking insert is separably fitted to the second locking lug.

Optionally, the rotating bases on both sides are connected by a bottom linkage.

Optionally, universal wheels are rotatably mounted both at an end of the first bottom horizontal brace rod away from the rotating base and at an end of the second bottom horizontal brace rod away from the rotating base.

Not according to the invention, the present disclosure provides a quickly foldable crib frame, comprising a first U-shaped surrounding frame, a second U-shaped surrounding frame, upper vertical rods, and lower vertical rods;
both the two free ends of the first U-shaped surrounding frame and the two free ends of the second U-shaped surrounding frame are rotatably connected to one ends of the upper vertical rods, and the other ends of the upper vertical rods are slidably fitted in the lower vertical rods in length directions of the lower vertical rods.

Optionally, the quickly foldable crib frame further comprises a first surrounding frame connector, a second surrounding frame connector, an upper vertical rod connector, and a riveting pin, wherein the first surrounding frame connector is mounted at the free end of the first U-shaped surrounding frame, the second surrounding frame connector is mounted at the free end of the second U-shaped surrounding frame, the upper vertical rod connector is mounted at an upper end of the upper vertical rod, and the first surrounding frame connector and the second surrounding frame connector are rotatably connected to the upper vertical rod connector by means of the riveting pin.

Optionally, the lower vertical rod is in a tube structure, and the upper vertical rod is slidably inserted into the lower vertical rod.

Optionally, the quickly foldable crib frame further comprises a rotating base, a first bottom horizontal brace rod, and a second bottom horizontal brace rod, wherein the rotating base is connected to a lower end of the lower vertical rod, and the first bottom horizontal brace rod and the second bottom horizontal brace rod are rotatably connected to the two sides of the rotating base, respectively.

Optionally, the quickly foldable crib frame further comprises a sliding sleeve, a first bottom horizontal brace linkage, and a second bottom horizontal brace linkage, wherein the sliding sleeve is slidably sleeved on the lower vertical rod, the first bottom horizontal brace linkage has one end rotatably connected to the sliding sleeve and the other end rotatably connected to the first bottom horizontal brace rod, and the second bottom horizontal brace linkage has one end rotatably connected to the sliding sleeve and the other end rotatably connected to the second bottom horizontal brace rod

Optionally, the quickly foldable crib frame further comprises a sliding sleeve connecting tube, a sliding sleeve locking member, and a rotating pin, wherein the sliding sleeve connecting tube has an end connected to the sliding sleeve, and the sliding sleeve locking member is slidably inserted in the sliding sleeve connecting tube so that one end of the sliding sleeve locking member can extend from the sliding sleeve connecting tube and pass through the sliding sleeve, so as to abut against the lower vertical rod;
the sliding sleeve connecting tube is provided with a through hole, and the rotating pin passes through the through hole and abuts against the sliding sleeve locking member so that the sliding sleeve connecting tube and the sliding sleeve locking member are fixed relative to each other, whereby the sliding sleeve is fixed to the lower vertical rod.

Optionally, two lower vertical rods are provided, the two lower vertical rods are arranged spaced apart from each other, and the two ends of the sliding sleeve connecting tube are connected to the sliding sleeves sleeved on the two lower vertical rods, respectively;
two sliding sleeve locking members are provided, the two sliding sleeve locking members are arranged spaced apart from each other in the sliding sleeve connecting tube, one of the sliding sleeve locking members abuts against one of the lower vertical rods, and the other one of the sliding sleeve locking members abuts against the other one of the lower vertical rods.

Optionally, an outer wall of the sliding sleeve connecting tube is provided with a sliding slot communicating with an inner cavity of the sliding sleeve connecting tube, each of the two sliding sleeve locking members is provided with a sliding protrusion at its end close to the sliding slot, and the two sliding protrusions are slidably engaged in the sliding slots;
the quickly foldable crib frame further comprises a sliding sleeve unlocking member, wherein the sliding sleeve unlocking member is rotatably sleeved on the sliding sleeve connecting tube, the sliding sleeve unlocking member is provided with a first slot segment and a second slot segment, the first slot segment and the second slot segment communicate with each other to form a trapezoidal slot, and the first slot segment and the second slot segment are fitted with the two sliding protrusions at different time so that the two sliding sleeve locking members are moved close to or away from each other;
the sliding sleeve unlocking member is configured to drive the two sliding protrusions to slide from the first slot segment to the second slot segment or from the second slot segment to the first slot segment when rotating relative to the sliding sleeve connecting tube.

The embodiments of the present disclosure include, for example, the following advantageous effects over the prior art.

An embodiment of the present disclosure provides a quickly foldable crib frame. The upper vertical rods are slid and retracted into the lower vertical rods, so that the overall height of the crib frame is compressed. The sliding sleeves are slid upward along the lower vertical rods so that the first bottom horizontal brace rods, the second bottom horizontal brace rods, and the first U-shaped surrounding frame and the second U-shaped surrounding frame are driven to be folded coordinately and efficiently. Moreover, the crib frame has a reasonable structural design, occupying a smaller area when folded, which meets the user's intention to save space.

An embodiment of the present disclosure further provides a quickly foldable crib frame. When the first U-shaped surrounding frame and the second U-shaped surrounding frame are rotated relative to the upper vertical rods, the first U-shaped surrounding frame and the second U-shaped surrounding frame can be folded to occupy less space. Furthermore, when the upper vertical rods are moved relative to the lower vertical rods in the length directions of the lower vertical rods, the upper vertical rods and the lower vertical rods can be overlapped with each other, so that less space is occupied by the upper vertical rods and the lower vertical rods as a whole. In this way, the quickly foldable crib frame occupies less space and can be carried and moved conveniently after it is folded.

### Brief Description of Drawings

In order to more clearly illustrate technical solutions of embodiments of the present disclosure, drawings required for use in the embodiments will be described briefly below. It is to be understood that the drawings below are merely illustrative of some embodiments of the present disclosure, and therefore should not be considered as limiting its scope.
FIG. 1 is a schematic structural view of a quickly foldable crib frame according to an embodiment of the present disclosure;
FIG. 2 is a schematic view showing disassembly of a surrounding frame assembly of a quickly foldable crib frame according to an embodiment of the present disclosure;
FIG. 3 is a schematic structural view of a plug-in lock block fitted to a first locking lug according to an embodiment of the present disclosure;
FIG. 4 is a schematic sectional view of a quickly foldable crib frame according to an embodiment of the present disclosure when viewed in a front direction;
FIG. 5 is a schematic structural view of a sliding protrusion fitted to a sliding slot according to an embodiment of the present disclosure;
FIG. 6 is a schematic view showing a first laterally folded state of a quickly foldable crib frame according to an embodiment of the present disclosure;
FIG. 7 is a schematic view showing a second laterally folded state of a quickly foldable crib frame according to an embodiment of the present disclosure; and
FIG. 8 is a schematic view showing a third laterally folded state of a quickly foldable crib frame according to an embodiment of the present disclosure.

Reference Signs: 1-first U-shaped surrounding frame; 2-second U-shaped surrounding frame; 3-first surrounding frame connector; 4-second surrounding frame connector; 5-upper vertical rod connector; 6-upper vertical rod; 60-elastic locking protrusion; 61-first locking lug; 611-guiding space; 7-lower vertical rod; 70-locking hole; 71-second locking lug; 8-rotating base; 9-first bottom horizontal brace rod; 10-second bottom horizontal brace linkage; 11-first bottom horizontal brace linkage; 12-second bottom horizontal brace rod; 13-sliding sleeve; 130-unlocking insert; 14-plug-in lock block; 15-sliding sleeve connecting tube; 151-sliding slot; 16-sliding sleeve unlocking member; 161-first slot segment; 162-second slot segment; 17-sliding sleeve locking member; 170-through hole; 171-sliding protrusion; 18-rotating pin; 19-bottom linkage; 20-universal wheel; 21-riveting pin.

### Detailed Description of Embodiments

In order to further clarify the objects, technical solutions, and advantages of the embodiments of the present disclosure, the technical solutions of the embodiments of the present disclosure will be described below clearly and completely with reference to the drawings of the embodiments of the present disclosure. It is apparent that the embodiments to be described are some, but not all of the embodiments of the present disclosure. Generally, the components of the embodiments of the present disclosure, as described and illustrated in the drawings herein, may be arranged and designed in a wide variety of different configurations.

Thus, the following detailed description of the embodiments of the present disclosure, as represented in the drawings, is not intended to limit the scope of the present disclosure as claimed, but is merely representative of selected embodiments of the present disclosure.

It should be noted that similar reference signs and letters refer to similar items in the following drawings, and thus once a certain item is defined in one figure, it may not be further defined or explained in the following figures.

In the description of the present disclosure, it should be noted that orientation or positional relationships indicated by the terms such as "center", "up", "down", "left", "right", "vertical", "horizontal", "inside", and "outside", if present, are the orientation or positional relationships shown based on the drawings, or the orientation or positional relationships in which the inventive product is conventionally placed when in use, and these terms are intended only to facilitate the description of the present disclosure and simplify the description, but not intended to indicate or imply that the referred devices or elements must be in a particular orientation, or constructed or operated in the particular orientation, and therefore should not be construed as limiting the present disclosure.

In addition, terms such as "first", "second", and "third", if present, are used for distinguishing description only, and should not be understood as an indication or implication of relative importance.

In addition, the term such as "horizontal", "vertical", "overhanging", or the like, if present, means that a component may be slightly inclined, rather than being required to be absolutely horizontal or overhanging. For example, by the term "horizontal", it is simply meant that its direction is more horizontal than the term "vertical", and it is not meant that the structure must be completely horizontal, but it is meant that the structure may be slightly inclined.

In the description of the present disclosure, it should also be noted that terms such as "arranged", "mounted", "coupled", and "connected", if present, should be understood broadly, unless otherwise expressly specified or defined. For example, connection may be fixed connection or detachable connection or integral connection, may be mechanical connection or electric connection, or may be direct coupling or indirect coupling via an intermediate medium or internal communication between two elements. The specific meanings of the above-mentioned terms in the present disclosure can be understood by those of ordinary skill in the art according to specific situations.

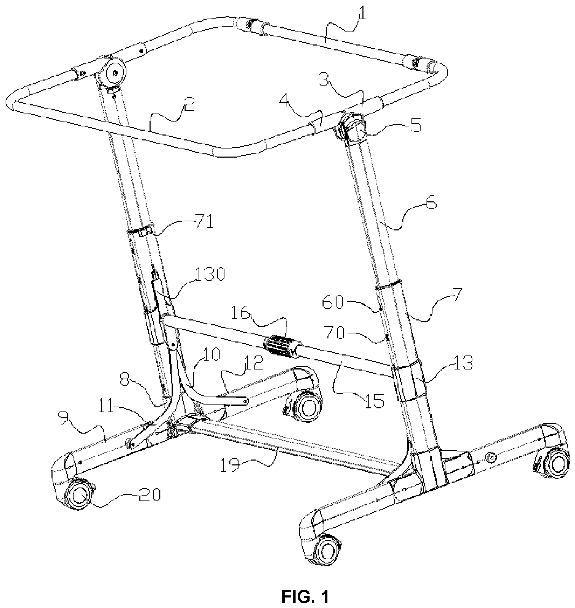

Referring to FIG. 1, an embodiment of the present disclosure provides a quickly foldable crib frame, comprising a first U-shaped surrounding frame 1, a second U-shaped surrounding frame 2, upper vertical rods 6, and lower vertical rods 7. Both the two free ends of the first U-shaped surrounding frame 1 and the two free ends of the second U-shaped surrounding frame 2 are rotatably connected to one ends of the upper vertical rods 6, and the other ends of the upper vertical rods 6 are slidably fitted into the lower vertical rods 7 in the length directions of the lower vertical rods 7.

It can be understood that when the first U-shaped surrounding frame 1 and the second U-shaped surrounding frame 2 are rotated relative to the upper vertical rods 6, the first U-shaped surrounding frame 1 and the second U-shaped surrounding frame 2 can be folded to occupy reduced space. Furthermore, when the upper vertical rods 6 are moved relative to the lower vertical rods 7 in the length directions of the lower vertical rods 7, the upper vertical rods 6 and the lower vertical rods 7 can be overlapped with each other, so that less space is occupied by the upper vertical rods 6 and the lower vertical rods 7 as a whole. In this way, the quickly foldable crib frame occupies less space and can be carried and moved conveniently after it is folded.

Referring to FIGS. 1 to 3, in this embodiment, the quickly foldable crib frame further comprises first surrounding frame connectors 3, second surrounding frame connectors 4, upper vertical rod connectors 5, and riveting pins 21. The first surrounding frame connector 3 is mounted at the free end of the first U-shaped surrounding frame 1. The second surrounding frame connector 4 is mounted at the free end of the second U-shaped surrounding frame 2. The upper vertical rod connector 5 is mounted at the upper end of the upper vertical rod 6. The first surrounding frame connector 3 and the second surrounding frame connector 4 are rotatably connected to the upper vertical rod connector 5 by means of the riveting pin 21.

It should be noted that, in this embodiment, each of the first surrounding frame connector 3, the second surrounding frame connector 4, and the upper vertical rod connector 5 is in a sleeve structure. The first surrounding frame connector 3 is detachably sleeved on the free end of the first U-shaped surrounding frame 1. The second surrounding frame connector 4 is detachably sleeved on the free end of the second U-shaped surrounding frame 2. The upper vertical rod connector 5 is detachably sleeved on the upper vertical rod 6. This facilitates the mounting and replacement of the first surrounding frame connector 3, the second surrounding frame connector 4, and the upper vertical rod connector 5.

It should be noted that, in this embodiment, the riveting pins 21 pass simultaneously through the first surrounding frame connectors 3, the second surrounding frame connectors 4, and the upper vertical rod connectors 5. In this way, the first surrounding frame connectors 3 and the second surrounding frame connectors 4 can be rotated relative to the upper vertical rod connectors 5 to drive the first U-shaped surrounding frame 1 and the second U-shaped surrounding frame 2 to rotate, thereby achieving the folding function of the first U-shaped surrounding frame 1 and the second U-shaped surrounding frame 2, so as to reduce the amount of space occupied by the first U-shaped surrounding frame 1 and the second U-shaped surrounding frame 2.

Referring to FIGS. 1 to 3, in this embodiment, the quickly foldable crib frame further comprises a plug-in lock blocks 14. The plug-in lock block 14 is separably fitted to the riveting pin 21, so as to be switched between a first state and a second state.

Specifically, in the first state, the plug-in lock blocks 14 lock the riveting pins 21. In this way, the first surrounding frame connectors 3 and the second surrounding frame connectors 4 are not rotatable relative to the upper vertical rod connectors 5. At this time, an area enclosed by the first U-shaped surrounding frame 1 and the second U-shaped surrounding frame 2 allows a baby to take activity or rest therein.

Furthermore, in the second state, the plug-in lock blocks 14 are separated from the riveting pins 21 such that the first surrounding frame connectors 3 and the second surrounding frame connectors 4 are rotatable relative to the upper vertical rod connectors 5. At this time, the first U-shaped surrounding frame 1 and the second U-shaped surrounding frame 2 can be folded to occupy a reduced amount of space.

It should be noted that the quickly foldable crib frame further comprises a first locking lugs 61. The first locking lug 61 is arranged at the top end of the upper vertical rod 6. The first locking lug 61 has a guiding space 611, through which one end of the plug-in lock block 14 passes. In this way, when the plug-in lock block 14 is separated from the riveting pin 21, the plug-in lock block 14 is movable along the guiding space 611, which has the effect of guiding the direction of movement of the plug-in lock block 14 and facilitates the disengagement of the plug-in lock block 14 from the riveting pin 21.

Furthermore, in the first state described above, the plug-in lock blocks 14 are engaged with the first locking lugs 61, and the plug-in lock blocks 14 can be locked by the first locking lugs 61, so that the first U-shaped surrounding frame 1, the second U-shaped surrounding frame 2, and the upper vertical rods 6 are locked.

With reference to FIG. 1, in this embodiment, the lower vertical rod 7 is in a tube structure, and the upper vertical rod 6 is slidably inserted into the lower vertical rod 7. In this way, the upper vertical rod 6 can be conveniently received in the inner cavity of the lower vertical rod 7, which facilitates storage, carrying, and movement thereof.

It should be noted that, in other embodiments, the upper vertical rod 6 may be in a tube structure, and the upper vertical rod 6 is slidably sleeved on the outside of the lower vertical rod 7. Alternatively, in other embodiments, a sliding fitting structure consisting of a sliding slot and a sliding block may be used between the upper vertical rod 6 and the lower vertical rod 7 to achieve the stretching and contracting functions.

Referring to FIG. 1, in this embodiment, a side wall of the upper vertical rod 6 is provided with an elastic locking protrusion 60. A side wall of the lower vertical rod 7 is provided with a locking hole 70 communicating with the inner cavity of the lower vertical rod 7. The elastic locking protrusion 60 can be fitted into the locking hole 70 in locking manner, so as to be switched between a third state and a fourth state.

Specifically, in the third state, the elastic locking protrusions 60 are fitted into the locking holes 70 such that the upper vertical rods 6 are fixed relative to the lower vertical rods 7. At this time, the upper vertical rods 6 and the lower vertical rods 7 serve as a support, which can support the first U-shaped surrounding frame 1, the second U-shaped surrounding frame 2, and a baby located in the area enclosed by the first U-shaped surrounding frame 1 and the second U-shaped surrounding frame 2.

In the fourth state, the elastic locking protrusion 60 is disengaged from the locking hole 70 such that the upper vertical rod 6 is slidable in the inner cavity of the lower vertical rod 7. At this time, the upper vertical rod 6 can be retracted into the inner cavity of the lower vertical rod 7, and the elastic locking protrusion 60 is in a compressed state.

It can be understood that once the elastic locking protrusion 60 is moved to a region corresponding to the locking hole 70, the elastic locking protrusion 60 can be fitted into the locking hole 70 under the elastic action. In other words, the switching from the fourth state to the third state is completed. Similarly, when the elastic locking protrusion 60 is pressed to be disengaged from the locking hole 70 and then the upper vertical rod 6 is moved so that the upper vertical rod 6 is retracted into the inner cavity of the lower vertical rod 7, such that the switching from the third state to the fourth state is completed.

Referring to FIG. 1, in this embodiment, a plurality of locking holes 70 are provided, and the plurality of locking holes 70 are arranged spaced apart from one another in the length direction of the lower vertical rod 7. When the elastic locking protrusion 60 is fitted into a different locking holes 70, the upper vertical rod 6 extends from the inner cavity of the lower vertical rod 7 at a different length. In this way, in actual use, the user may fit the elastic locking protrusions 60 into the locking holes 70 at different heights according to the actual situation, so as to change the actual height of the first U-shaped surrounding frame 1 and the second U-shaped surrounding frame 2.

Referring to FIG. 1, in this embodiment, the quickly foldable crib frame further comprises rotating bases 8, first bottom horizontal brace rods 9, and second bottom horizontal brace rods 12. The rotating base 8 is connected to the lower end of the lower vertical rod 7. The first bottom horizontal brace rod 9 and the second bottom horizontal brace rod 12 are rotatably connected to the two sides of the rotating base 8, respectively.

It can be understood that when the first bottom horizontal brace rod 9 and the second bottom horizontal brace rod 12 are rotated relative to the rotating base 8 in a direction close to the lower vertical rod 7, less space can be occupied by the first bottom horizontal brace rod 9 and the second bottom horizontal brace rod 12 as a whole. When the first bottom horizontal brace rod 9 and the second bottom horizontal brace rod 12 are rotated relative to the rotating base 8 in a direction away from the lower vertical rod 7, at this time, the first bottom horizontal brace rod 9 and the second bottom horizontal brace rod 12 can achieve the function of supporting the lower vertical rod 7. At this time, the length direction of the first bottom horizontal brace rod 9 and the length direction of the second bottom horizontal brace rod 12 are in the same direction and perpendicular to the length direction of the lower vertical rod 7, which can effectively improve the stability.

Furthermore, in this embodiment, universal wheels 20 are mounted both at an end of the first bottom horizontal brace rod 9 away from the rotating base 8 and at an end of the second bottom horizontal brace rod 12 away from the rotating base 8. In this way, the quickly foldable crib frame can be conveniently moved as a whole.

Referring to FIGS. 1, 4, and 5, in this embodiment, the quickly foldable crib frame further comprises sliding sleeves 13, first bottom horizontal brace linkages 11, and second bottom horizontal brace linkages 10. The sliding sleeve 13 is slidably sleeved on the lower vertical rod 7. One end of the first bottom horizontal brace linkage 11 is rotatably connected to the sliding sleeve 13, and the other end of the first bottom horizontal brace linkage 11 is rotatably connected to the first bottom horizontal brace rod 9. One end of the second bottom horizontal brace linkage 10 is rotatably connected to the sliding sleeve 13, and the other end of the second bottom horizontal brace linkage 10 is rotatably connected to the second bottom horizontal brace rod 12.

In this way, when the sliding sleeve 13 is sliding relative to the lower vertical rod 7, the first bottom horizontal brace rod 9 and the second bottom horizontal brace rod 12 can be simultaneously driven to rotate relative to the rotating base 8, so that the first bottom horizontal brace rod 9 and the second bottom horizontal brace rod 12 can be conveniently folded or unfolded.

Referring to FIGS. 1, 4, and 5, in this embodiment, the quickly foldable crib frame further comprises a sliding sleeve connecting tube 15 and a sliding sleeve locking member 17. The sliding sleeve connecting tube 15 has an end connected to the sliding sleeve 13. The sliding sleeve locking member 17 is slidably arranged in the sliding sleeve connecting tube 15.

It should be noted that, in this embodiment, the sliding sleeve locking member 17 is in a rod-shaped structure, and one end of the sliding sleeve locking member 17 can extend from the sliding sleeve connecting tube 15 and pass through the sliding sleeve 13 and finally abut against the lower vertical rod 7.

Referring to FIGS. 1, 4, and 5, in this embodiment, the quickly foldable crib frame further comprises rotating pins 18. The sliding sleeve connecting tube 15 is further provided with through holes 170. The rotating pin 18 passes through the through hole 170 and abuts against the sliding sleeve locking member 17. In this way, the sliding sleeve connecting tube 15 and the sliding sleeve locking member 17 can be fixed relative to each other, so that the sliding sleeve 13 can be fixed to the lower vertical rod 7.

In this way, in the normal use state, the sliding sleeve 13 will not slide relative to the lower vertical rod 7, so that a good supporting effect can be achieved.

It can be understood that when the rotating pin 18 is removed, the sliding sleeve locking member 17 is movable in a direction away from the lower vertical rod 7, so that the sliding sleeve locking member 17 can be disengaged from the sliding sleeve 13. In this case, the sliding sleeve 13 is slidable relative to the lower vertical rod 7 for subsequent folding operation.

With reference to FIG. 1, in this embodiment, there are two lower vertical rods 7. The two lower vertical rods 7 are arranged spaced apart from each other. The two ends of the sliding sleeve connecting tube 15 are connected to the sliding sleeves 13 sleeved on the two lower vertical rods 7, respectively. In this way, the stability between the two lower vertical rods 7 can be enhanced, so as to improve the supporting performance.

Correspondingly, in this embodiment, the quickly foldable crib frame further comprises a bottom linkage 19. There are, likewise, two rotating bases 8. The two rotating bases 8 are mounted to the two lower vertical rods 7, respectively. The two ends of the bottom linkage 19 are connected to the two rotating bases 8, respectively. In this way, the stability between the two rotating bases 8 can be improved.

In this embodiment, there are two sliding sleeve locking members 17. The two sliding sleeve locking members 17 are arranged spaced apart from each other in the sliding sleeve connecting tube 15, wherein one of the sliding sleeve locking members 17 abuts against one of the lower vertical rods 7, and the other sliding sleeve locking member 17 abuts against the other lower vertical rod 7.

It can be understood that the gap between the two sliding sleeve locking members 17 provides space for the movements of the two sliding sleeve locking members 17 in the axial direction of the sliding sleeve connecting tube 15.

Furthermore, the two sliding sleeve locking members 17 allow the sliding sleeves 13 on the two lower vertical rods 7 to be fixed to the corresponding lower vertical rods 7, respectively. It can be understood that when the two sliding sleeve locking members 17 are moved close to each other, the two sliding sleeve locking members 17 are disengaged from the corresponding lower vertical rods 7, respectively, so that the sliding sleeves 13 on the two lower vertical rods 7 are slidable to allow the subsequent folding operation.

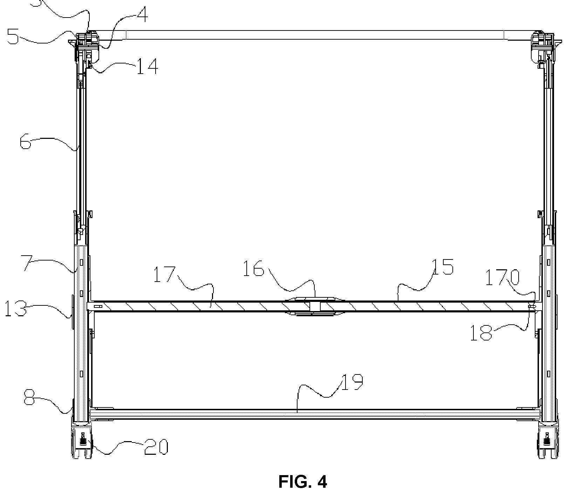

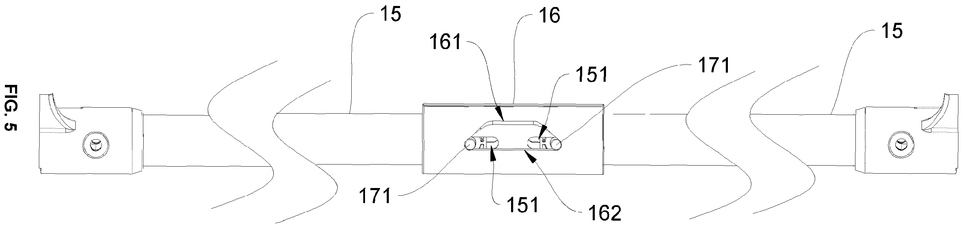

With reference to FIGS. 4 and 5, the outer wall of the sliding sleeve connecting tube 15 is provided with sliding slots 151 communicating with the inner cavity of the sliding sleeve connecting tube 15. Each of the two sliding sleeve locking members 17 is provided with a sliding protrusion 171 at its end close to the sliding slot 151. The two sliding protrusions 171 are slidably engaged in the sliding slots 151, so that the two sliding sleeve locking members 17 are movable close to or away from each other.

It can be understood that the sliding protrusions 171 can effectively serve as guiding when sliding in the sliding slots 151.

Referring to FIG. 5, in this embodiment, there are two sliding slots 151. The two sliding slots 151 are arranged spaced apart from each other. The two sliding protrusions 171 are engaged in the two sliding slots 151, respectively. The two sliding protrusions 171 will not interfere with each other during sliding, whereby smooth sliding can be ensured.

Referring to FIGS. 1, 4, and 5, in this embodiment, the quickly foldable crib frame further comprises a sliding sleeve unlocking member 16. The sliding sleeve unlocking member 16 is rotatably sleeved on the sliding sleeve connecting tube 15. The sliding sleeve unlocking member 16 is provided with a first slot segment 161 and a second slot segment 162. The first slot segment 161 and the second slot segment 162 communicate with each other to form a trapezoidal slot. The first slot segment 161 and the second slot segment 162 are fitted with the two sliding protrusions 171 at different time, so that the two sliding sleeve locking members 17 are moved close to or away from each other.

In this embodiment, when the sliding sleeve unlocking member 16 is rotated relative to the sliding sleeve connecting tube 15, the two sliding protrusions 171 may be driven to slide from the second slot segment 162 to the first slot segment 161, so that the two sliding sleeve locking members 17 are moved close to each other, and the two sliding sleeve locking members 17 are separated from the corresponding lower vertical rods 7, respectively. At this time, the sliding sleeves 13 are slidable relative to the lower vertical rods 7, so as to achieve the subsequent folding operation.

Furthermore, when the sliding sleeve unlocking member 16 is rotated relative to the sliding sleeve connecting tube 15, the two sliding protrusions 171 may also be driven to slide from the first slot segment 161 to the second slot segment 162, so that the two sliding sleeve locking members 17 are moved away from each other, and the two sliding sleeve locking members 17 pass through the corresponding sliding sleeves 13 and abut against the corresponding lower vertical rods 7, respectively. At this time, the sliding sleeves 13 are fixed relative to the lower vertical rods 7.

Referring to FIG. 1, an integrally formed second locking lug 71 is arranged on the inner wall of the top end of the lower vertical rod 7. An integrally formed unlocking insert 130 is arranged on the side wall of the sliding sleeve 13. The unlocking insert 130 is separably fitted to the second locking lug 71. During folding, the unlocking inserts 130 can be moved relative to the lower vertical rods 7 along with the sliding sleeves 13. When moved to the positions corresponding to the second locking lugs 71, the unlocking inserts 130 are fitted to the second locking lugs 71 to achieve a fixing function. In this way, after the folding operation is completed, the sliding sleeves 13 can be fixed relative to the lower vertical rods 7, so that the quickly foldable crib frame can be kept in the folded state and thus conveniently carried and moved.

In summary, referring to FIG. 1 and FIGS. 6 to 8. The quickly foldable crib frame is folded by the following process.

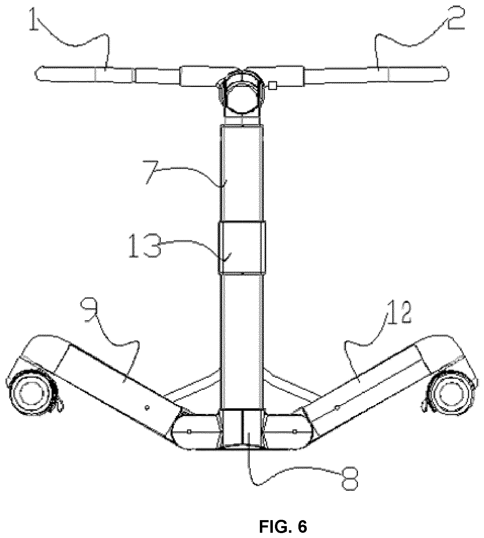

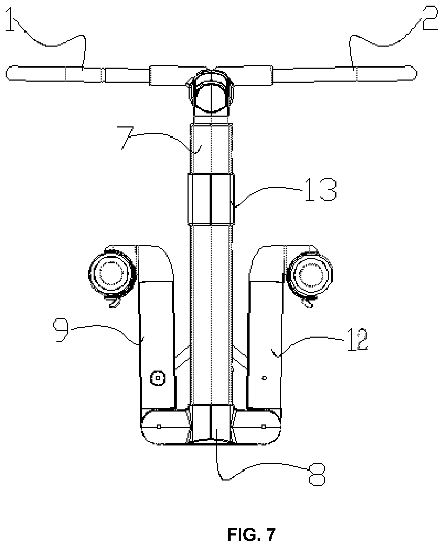

The elastic locking protrusions 60 are pressed so that the elastic locking protrusions 60 are disengaged from the locking holes 70, and the upper vertical rods 6 are slid downward and inserted into the lower vertical rods 7 to achieve overlapping. Then, the rotating pins 18 are adjusted so that the rotating pins 18 are separated from the sliding sleeve connecting tube 15, and then the sliding sleeve unlocking member 16 is rotated to drive the two sliding protrusions 171 to slide from the second slot segment 162 to the first slot segment 161, so that the two sliding sleeve locking members 17 are moved closed to each other, and the two sliding sleeve locking members 17 are separated from the corresponding lower vertical rods 7, respectively. Then, the two sliding sleeves 13 are respectively slid relative to the two lower vertical rods 7 to drive the corresponding first bottom horizontal brace rods 9 and second bottom horizontal brace rods 12 to rotate relative to the rotating bases 8, so as to achieve folding (as in the states shown in FIGS. 6 and 7).

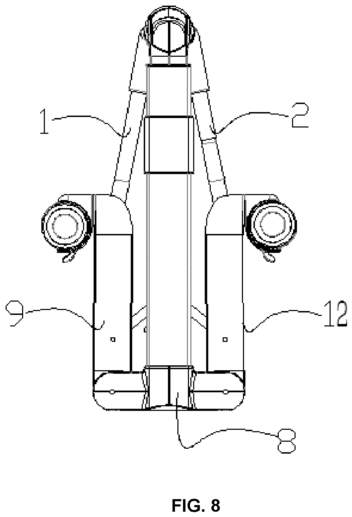

Then, the plug-in lock blocks 14 are adjusted so that the plug-in lock blocks 14 are separated from the riveting pins 21, and the first surrounding frame connectors 3 and the second surrounding frame connectors 4 are rotated relative to the upper vertical rod connectors 5, so as to achieve folding (as in the state shown in FIG. 8).

As shown in FIGS. 1 to 6, the present disclosure provides a quickly foldable crib frame, comprising: a first U-shaped surrounding frame 1 and a second U-shaped surrounding frame 2. First surrounding frame connectors 3 and second surrounding frame connectors 4 integrally formed are arranged at tail ends on both sides of the first U-shaped surrounding frame 1 and the second U-shaped surrounding frame 2, respectively. The first surrounding frame connector 3 and the second surrounding frame connector 4 on each of both sides are respectively rotatably riveted to an upper vertical rod connector 5, which is fixedly sleeved on a top end of an upper vertical rod 6. A bottom end of the upper vertical rod 6 is slidably inserted in an inner cavity of a lower vertical rod 7. A bottom end of the lower vertical rod 7 is fixedly inserted in a rotating base 8. One end of a first bottom horizontal brace rod 9 and one end of a second bottom horizontal brace rod 12 are rotatably riveted to the two, front and rear, sides of the rotating base 8, respectively. One end of a first bottom horizontal brace linkage 11 and one end of a second bottom horizontal brace linkage 10 are rotatably riveted to inner walls of the first bottom horizontal brace rod 9 and the second bottom horizontal brace rod 12, respectively. A sliding sleeve 13 is slidably sleeved on the lower vertical rod 7. Both the other end of the first bottom horizontal brace linkage 11 and the other end of the second bottom horizontal brace linkage 10 are rotatably riveted to the sliding sleeve 13.

A plug-in lock block 14 is arranged in the inner riveting cavity among the first surrounding frame connector 3, the second surrounding frame connector 4, and the upper vertical rod connector 5. An integrally formed first locking lug 61 is arranged on the inner wall of the top end of the upper vertical rod 6. The bottom end of the plug-in lock block 14 is inserted in the first locking lug 61 to form a locking fitting assembly.

An elastic locking protrusion 60 is arranged on the side wall of the bottom end of the upper vertical rod 6. Several locking holes 70 are provided in the side wall of the lower vertical rod 7. The elastic locking protrusion 60 is inserted into one of the provided locking holes 70 to form a locking fitting assembly.

An integrally formed sliding sleeve connecting tube 15 is arranged perpendicularly on the side walls of the sliding sleeves 13. A sliding sleeve unlocking member 16 is sleeved on the middle position of the sliding sleeve connecting tube 15. Sliding sleeve locking members 17 are inserted into both sides of the inner cavity of the sliding sleeve connecting tube 15. The sliding sleeve locking members 17 on both sides are arranged spaced apart from each other, and one end of each of the sliding sleeve locking members 17 is provided with a through hole 170. The sliding sleeve connecting tube 15 is provided with a rotating pin 18 assembled in the through hole 170 for sliding adjustment. The one end of the sliding sleeve locking member 17 is arranged to abut against and thus be locked and assembled onto the side wall of the lower vertical rod 7. An integrally formed second locking lug 71 is arranged on the inner wall of the top end of the lower vertical rod 7. An integrally formed unlocking insert 130 is arranged on the side wall of the sliding sleeve 13. The second locking lug 71 is arranged such that the unlocking insert 130 is stably inserted therein.

The rotating bases 8 on both sides are connected by a bottom linkage 19. The bottom linkage 19 is arranged for stable supporting and connection.

A universal wheel 20 is rotatably mounted at the other end of each of the first bottom horizontal brace rods 9 and the second bottom horizontal brace rods 12. The universal wheels 20 are arranged to facilitate pushing of the crib frame.

The present disclosure is implemented as follows. During folding, the user unlocks the upper vertical rods 6 from the lower vertical rods 7 by pressing the elastic locking protrusions 60 into the locking holes 70, so that the upper vertical rods 6 are slid downward and inserted and retracted into the lower vertical rods 7. The sliding of the sliding sleeve locking members 17 is adjusted by rotating pins 18 to release the locking by abutment of the lower vertical rods 7 by the sliding sleeve locking members 17, so that the sliding sleeves 13 are slid upward along the lower vertical rods 7, whereby the sliding sleeves 13 drive, by means of the first bottom horizontal brace linkages 11 and the second bottom horizontal brace linkages 10, the first bottom horizontal brace rods 9 and the second bottom horizontal brace rods 12 to be folded upward along the rotating bases 8, respectively. The first bottom horizontal brace rods 9 and the second bottom horizontal brace rods 12 are completely folded until the first bottom horizontal brace rods 9 and the second bottom horizontal brace rods 12 are parallel to the lower vertical rods 7. While the sliding sleeves 13 are sliding upward, the unlocking inserts 130 arranged on the sliding sleeves 13 are inserted upward through the second locking lugs 71, and the plug-in lock blocks 14 inserted and locked in the first locking lugs 61 are pushed upward. Thus, the plug-in lock blocks 14 are moved upward in the inner riveting cavities among the first surrounding frame connectors 3, the second surrounding frame connectors 4, and the upper vertical rod connectors 5, so as to unlock the riveting pins, so that the first U-shaped surrounding frame 1 and the second U-shaped surrounding frame 2 are folded downward under the action of their own gravity, whereby the whole crib frame is folded. According to this technical solution, the upper vertical rods are slid and retracted into the lower vertical rods, so that the overall height of the crib frame is compressed. The sliding sleeves are slid upward along the lower vertical rods so that the first bottom horizontal brace rods, the second bottom horizontal brace rods, and the first U-shaped surrounding frame and the second U-shaped surrounding frame are driven to be folded and retracted coordinately and efficiently. Moreover, the crib frame has a reasonable structural design, occupying a smaller area when folded, which meets the user's intention to save space.

### In some embodiments:

Referring to FIG. 1, a quickly foldable crib frame shown in FIG. 1 comprises a first U-shaped surrounding frame 1, a second U-shaped surrounding frame 2, first surrounding frame connectors 3, second surrounding frame connectors 4, upper vertical rod connectors 5, upper vertical rods 6, elastic locking protrusions 60, lower vertical rods 7, sliding sleeves 13, rotating bases 8, first bottom horizontal brace rods 9, second bottom horizontal brace rods 12, first bottom horizontal brace linkages 11, second bottom horizontal brace linkages 10, unlocking inserts 130, second locking lugs 71, a sliding sleeve connecting tube 15, a bottom linkage 19, and universal wheels 20.

The first surrounding frame connectors 3 are mounted at the both free ends of the first U-shaped surrounding frame 1. The second surrounding frame connectors 4 are mounted at the both free ends of the second U-shaped surrounding frame 2. The upper vertical rod connectors 5 are mounted at the upper ends of the upper vertical rods 6. Both the first surrounding frame connectors 3 and the second surrounding frame connectors 4 are rotatably connected to the upper vertical rod connectors 5.

The elastic locking protrusion 60 is mounted to the upper vertical rod 6. The lower vertical rod 7 is provided with a plurality of locking holes 70. The elastic locking protrusion 60 is fitted into one of the locking holes 70. When the elastic locking protrusion 60 is pressed, the elastic locking protrusion 60 is separated from the locking hole 70, so that the upper vertical rod 6 slides relative to the lower vertical rod 7, and the upper vertical rod 6 is received in the inner cavity of the lower vertical rod 7.

The rotating bases 8 are mounted at the lower ends of the corresponding lower vertical rods 7, and the first bottom horizontal brace rods 9 and the second bottom horizontal brace rods 12 are rotatably connected to the two sides of the rotating bases 8, respectively.

The sliding sleeve 13 is sleeved on the lower vertical rod 7. One end of the first bottom horizontal brace linkage 11 is rotatably connected to the sliding sleeve 13, and the other end of the first bottom horizontal brace linkage 11 is rotatably connected to the first bottom horizontal brace rod 9. One end of the second bottom horizontal brace linkage 10 is rotatably connected to the sliding sleeve 13, and the other end of the second bottom horizontal brace linkage 10 is rotatably connected to the second bottom horizontal brace rod 12. When the sliding sleeve 13 is sliding relative to the lower vertical rod 7, the first bottom horizontal brace rod 9 and the second bottom horizontal brace rod 12 can be simultaneously driven to rotate relative to the rotating base 8.

Two upper vertical rods 6, two lower vertical rods 7, two sliding sleeves 13, and two rotating bases 8 are provided and correspond to each other, respectively. The first bottom horizontal brace rod 9 and the second bottom horizontal brace rod 12 are rotatably connected to each of the rotating bases 8. Each of the first bottom horizontal brace rods 9 is correspondingly connected with one of the first bottom horizontal brace linkages 11, and each of the second bottom horizontal brace rods 12 is correspondingly connected with one of the second bottom horizontal brace linkages 10.

Furthermore, each of the first bottom horizontal brace rods 9 is equipped with one of the universal wheels 20, and each of the second bottom horizontal brace rods 12 is equipped with one of the universal wheels 20.

The two ends of the bottom linkage 19 are respectively connected to the two rotating bases 8 to enhance stability.

The two ends of the sliding sleeve connecting tube 15 are connected to the two sliding sleeves 13, respectively. When the sliding sleeves 13 are sliding relative to the lower vertical rods 7, the sliding sleeve connecting tube 15 can be moved up and down along with the sliding sleeves 13.

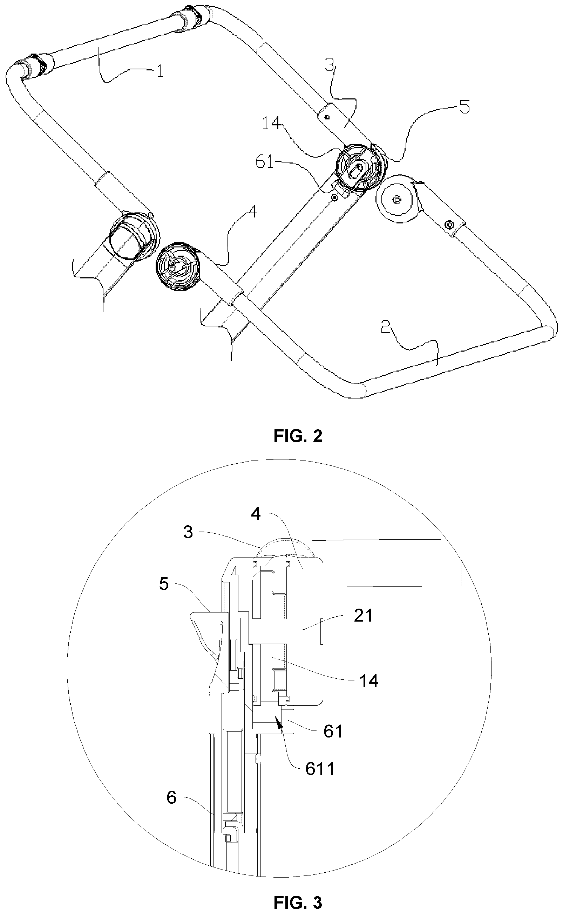

Referring to FIG. 2, the first surrounding frame connector 3 and the second surrounding frame connector 4 can be separated from each other for easy mounting and replacement thereof.

The plug-in lock block 14 is separably fitted to the first locking lug 61. When the plug-in lock block 14 is locked by the first locking lug 61, the first surrounding frame connector 3 and the second surrounding frame connector 4 are not rotatable relative to the upper vertical rod connector 5. When the plug-in lock block 14 is separated from the first locking lug 61, the first surrounding frame connector 3 and the second surrounding frame connector 4 are rotatable relative to the upper vertical rod connector 5.

Referring to FIG 3, the riveting pins 21 pass simultaneously through the first surrounding frame connectors 3, the second surrounding frame connectors 4, and the upper vertical rod connectors 5, and the first surrounding frame connectors 3 and the second surrounding frame connectors 4 are rotatable relative to the vertical rod connectors to achieve the folding function of the first U-shaped surrounding frame 1 and the second U-shaped surrounding frame 2.

The plug-in lock block 14 is engaged with the first locking lug 61, and the plug-in lock block 14 is locked by the first locking lug 61, so that the first surrounding frame connector 3 and the second surrounding frame connector 4 are not rotatable relative to the upper vertical rod connector 5.

When the plug-in lock block 14 is being separated from the riveting pin 21, the plug-in lock block 14 is moving along the guiding space 611. After they are separated, the first surrounding frame connector 3 and the second surrounding frame connector 4 are rotatable relative to the upper vertical rod connector 5.

Referring to FIG. 4, the two ends of the sliding sleeve connecting tube 15 are connected to the two sliding sleeves 13, respectively. When the sliding sleeves 13 are sliding relative to the lower vertical rods 7, the sliding sleeve connecting tube 15 can be moved up and down along with the sliding sleeves 13.

Both sliding sleeve locking members 17 are slidably inserted in the sliding sleeve connecting tube 15, wherein one of the sliding sleeve locking members 17 abuts against one of the lower vertical rods 7, and the other sliding sleeve locking member 17 abuts against the other lower vertical rod 7.

The gap between the two sliding sleeve locking members 17 provides space for the movements of the two sliding sleeve locking members 17 in the axial direction of the sliding sleeve connecting tube 15.

The sliding sleeve connecting tube 15 is further provided with through holes 170, and the rotating pins 18 pass through the through holes 170 and abut against the sliding sleeve locking members 17. The rotating pins 18 allow the sliding sleeve connecting tube 15 and the sliding sleeve locking members 17 to be fixed relative to each other, so that the sliding sleeves 13 can be fixed to the lower vertical rods 7.

A sliding sleeve unlocking member 16 is rotatably sleeved on the sliding sleeve connecting tube 15, and the inner wall of the sliding sleeve unlocking member 16 abuts against both of the two sliding sleeve locking members 17. When the sliding sleeve unlocking member 16 is rotated, the two sliding sleeve locking members 17 can be driven to move close to or away from each other.

The rotating bases 8 are mounted at the lower ends of the two lower vertical rods 7, and the two ends of the bottom linkage 19 are respectively connected to the two rotating bases 8 to enhance stability.

The universal wheels 20 are further mounted at the lower ends of the two lower vertical rods 7 for easy carrying and moving.

The lower vertical rods 7 each are in a tube structure, and the upper vertical rods 6 are slidably inserted into the lower vertical rods 7. The upper vertical rods 6 and lower vertical rods 7 are provided in a same number and correspond to each other. Referring to FIG. 5, the outer wall of the sliding sleeve connecting tube 15 is provided with sliding slots 151 communicating with the inner cavity of the sliding sleeve connecting tube 15. Each of the two sliding sleeve locking members 17 is provided with a sliding protrusion 171 at its end close to the sliding slot 151. The two sliding protrusions 171 are slidably engaged in the sliding slots 151. The sliding slots 151 serve as a guide for the movements of the sliding protrusions 171.

Two sliding slots 151 are provided. The two sliding slots 151 are arranged spaced apart from each other. The two sliding protrusions 171 are engaged in the two sliding slots 151, respectively, so that the two sliding protrusions 171 will not interfere with each other during sliding.

The sliding sleeve unlocking member 16 is slidably sleeved on the sliding sleeve connecting tube 15. The sliding sleeve unlocking member 16 is provided with a first slot segment 161 and a second slot segment 162. The first slot segment 161 and the second slot segment 162 communicate with each other to form a trapezoidal slot.

When the sliding sleeve unlocking member 16 is rotated relative to the sliding sleeve connecting tube 15, the two sliding protrusions 171 are driven to slide from the first slot segment 161 to the second slot segment 162, so that the two sliding sleeve locking members 17 are moved away from each other.

When the sliding sleeve unlocking member 16 is rotated relative to the sliding sleeve connecting tube 15, the two sliding protrusions 171 may also be driven to slide from the second slot segment 162 to the first slot segment 161, so that the two sliding sleeve locking members 17 are moved close to each other.

Referring to FIG. 6, the sliding sleeves 13 are moved upward along the lower vertical rods 7 so that the first bottom horizontal brace rods 9 and the second bottom horizontal brace rods 12 are driven to be rotated relative to the rotating bases 8 to achieve folding.

Referring to FIG. 7, FIG. 7 shows a state where the sliding sleeves 13 are moved upward along the lower vertical rods 7 so that the first bottom horizontal brace rods 9 and the second bottom horizontal brace rods 12 are driven to be rotated relative to the rotating bases 8 and completely folded.

Referring to FIG. 8, FIG. 8 shows a state where the first U-shaped surrounding frame 1 and the second U-shaped surrounding frame 2 are rotated and completely folded.

Finally, it should be noted that the above embodiments are only intended to illustrate the present disclosure and not to limit the technical solutions described in the present disclosure. Therefore, although the present disclosure has been described in detail herein with reference to the various embodiments described above, it should be understood by those of ordinary skill in the art that the present disclosure may still be modified as long as it does not depart from the scope of the claims of the present disclosure.

### Industrial Applicability

As described above, the present disclosure provides a quickly foldable crib frame. When the first U-shaped surrounding frame and the second U-shaped surrounding frame are rotated relative to the upper vertical rods, the first U-shaped surrounding frame and the second U-shaped surrounding frame can be folded to occupy less space. When the upper vertical rods are moved relative to the lower vertical rods in the length directions of the lower vertical rods, the upper vertical rods and the lower vertical rods can be overlapped with each other, so that less space is occupied by the upper vertical rods and the lower vertical rods as a whole. The quickly foldable crib frame occupies less space and can be carried and moved conveniently after it is folded.

## Claims

1. A quickly foldable crib frame, comprising: a first U-shaped surrounding frame (1) and a second U-shaped surrounding frame (2), wherein a first surrounding frame connector (3) and a second surrounding frame connector (4), which are integrally formed, are arranged at each of tail ends on both sides of the first U-shaped surrounding frame (1) and the second U-shaped surrounding frame (2), respectively, the first surrounding frame connector (3) and the second surrounding frame connector (4) on each of both sides are rotatably riveted to an upper vertical rod (6) connector (5), respectively, wherein the upper vertical rod (6) connector (5) is fixedly sleeved on a top end of an upper vertical rod (6), a bottom end of the upper vertical rod (6) is slidably inserted in an inner cavity of a lower vertical rod (7), a bottom end of the lower vertical rod (7) is fixedly inserted in a rotating base (8), one end of a first bottom horizontal brace rod (9) and one end of a second bottom horizontal brace rod (12) are rotatably riveted to a front side and a rear side of the rotating base (8), respectively, one end of a first bottom horizontal brace linkage (11) and one end of a second bottom horizontal brace linkage (10) are rotatably riveted to inner walls of the first bottom horizontal brace rod (9) and the second bottom horizontal brace rod (12), respectively, a sliding sleeve (13) is slidably sleeved on the lower vertical rod (7), and both the other end of the first bottom horizontal brace linkage (11) and the other end of the second bottom horizontal brace linkage (10) are rotatably riveted to the sliding sleeve (13).

2. The quickly foldable crib frame according to claim 1, comprising riveting pins (21) and plug-in lock blocks (14), wherein both the first surrounding frame connector (3) and the second surrounding frame connector (4) are rotatably connected to the upper vertical rod (6) connector (5) by means of one of the riveting pins (21), and each of the plug-in lock blocks (14) is separably fitted to one of the riveting pins (21), so as to be switched between a first state and a second state;
in the first state, each of the plug-in lock blocks (14) locks one of the riveting pins (21) such that the first surrounding frame connector (3), the second surrounding frame connector (4), and the upper vertical rod (6) connector (5) are fixed relative to one another; and
in the second state, each of the plug-in lock blocks (14) is separated from one of the riveting pins (21) such that the first surrounding frame connector (3) and the second surrounding frame connector (4) are rotatable relative to the upper vertical rod (6) connector (5).

3. The quickly foldable crib frame according to claim 2, further comprising first locking lugs (61), wherein each of the first locking lugs (61) is arranged at the top end of the upper vertical rod (6), each of the first locking lugs (61) has a guiding space (611) through which one end of one of the plug-in lock blocks (14) passes, and each of the plug-in lock blocks (14) is engaged with one of the first locking lugs (61) and thus locked by the one of the first locking lugs (61) in the first state.

4. The quickly foldable crib frame according to any one of claims 1 to 3, wherein a side wall of the upper vertical rod (6) is provided with an elastic locking protrusion (60), a side wall of the lower vertical rod (7) is provided with at least one locking hole (70) communicating with the inner cavity of the lower vertical rod (7), and the elastic locking protrusion (60) is able to be locked into the at least one locking hole (70), so as to be switched between a third state and a fourth state;
in the third state, the elastic locking protrusion (60) is fitted into one of the at least one locking hole (70) such that the upper vertical rod (6) is fixed relative to the lower vertical rod (7); and
in the fourth state, the elastic locking protrusion (60) is disengaged from the one of the at least one locking hole (70) such that the upper vertical rod (6) is slidable in the inner cavity of the lower vertical rod (7).

5. The quickly foldable crib frame according to claim 4, wherein a plurality of locking holes (70) are provided, the plurality of locking holes (70) are arranged spaced apart from one another in a length direction of the lower vertical rod (7), and the elastic locking protrusion (60) is configured to be fitted into different locking holes (70), so as to change a length of extension of the upper vertical rod (6) from the inner cavity of the lower vertical rod (7).

6. The quickly foldable crib frame according to any one of claims 1 to 5, further comprising a sliding sleeve connecting tube (15), at least one sliding sleeve locking member (17), and at least one rotating pin (18), wherein the sliding sleeve connecting tube (15) has an end connected to the sliding sleeve (13), and the at least one sliding sleeve locking member (17) is slidably inserted in the sliding sleeve connecting tube (15), so that one end of the at least one sliding sleeve locking member (17) is able to extend from the sliding sleeve connecting tube (15) and pass through the sliding sleeve (13) to abut against the lower vertical rod (7); and
the sliding sleeve connecting tube (15) is provided with at least one through hole (170), and the at least one rotating pin (18) passes through the through hole (170) and abuts against the at least one sliding sleeve locking member (17), so that the sliding sleeve connecting tube (15) and the at least one sliding sleeve locking member (17) are fixed relative to each other, whereby the sliding sleeve (13) is fixed to the lower vertical rod (7).

7. The quickly foldable crib frame according to claim 6, wherein two lower vertical rods (7) are provided, the two lower vertical rods (7) are arranged spaced apart from each other, and two ends of the sliding sleeve connecting tube (15) are connected to sliding sleeves (13) sleeved on the two lower vertical rods (7), respectively; and
two sliding sleeve locking members (17) are provided, the two sliding sleeve locking members (17) are arranged spaced apart from each other in the sliding sleeve connecting tube (15), one of the sliding sleeve locking members (17) abuts against one of the lower vertical rods (7), and the other one of the sliding sleeve locking members (17) abuts against the other one of the lower vertical rods (7).

8. The quickly foldable crib frame according to claim 7, wherein an outer wall of the sliding sleeve connecting tube (15) is provided with sliding slots (151) communicating with an inner cavity of the sliding sleeve connecting tube (15), each of the two sliding sleeve locking members (17) is provided, at its end close to the sliding slots (151), with a sliding protrusion (171), and each of two sliding protrusions (171) is slidably engaged in one of the sliding slots (151), so that the two sliding sleeve locking members (17) are moved close to or away from each other.

9. The quickly foldable crib frame according to claim 8, further comprising a sliding sleeve unlocking member (16), wherein the sliding sleeve unlocking member (16) is rotatably sleeved on the sliding sleeve connecting tube (15), the sliding sleeve unlocking member (16) is provided with a first slot segment (161) and a second slot segment (162), the first slot segment (161) and the second slot segment (162) communicate with each other to form a trapezoidal slot, and the first slot segment (161) and the second slot segment (162) are fitted with the two sliding protrusions (171) at different time, so that the two sliding sleeve locking members (17) are moved close to or away from each other; and
the sliding sleeve unlocking member (16) is configured to drive the two sliding protrusions (171) to slide from the first slot segment (161) to the second slot segment (162) or from the second slot segment (162) to the first slot segment (161) when rotating relative to the sliding sleeve connecting tube (15).

10. The quickly foldable crib frame according to any one of claims 1 to 9, wherein a second locking lug (71) integrally formed is arranged on an inner wall of a top end of the lower vertical rod (7), an unlocking insert (130) integrally formed is arranged on a side wall of the sliding sleeve (13), wherein the unlocking insert (130) is separably fitted to the second locking lug (71).

11. The quickly foldable crib frame according to any one of claims 1 to 10, wherein rotating bases (8) on both sides are connected by a bottom linkage (19).

12. The quickly foldable crib frame according to any one of claims 1 to 11, wherein a universal wheel (20) is rotatably mounted at each of an end of the first bottom horizontal brace rod (9) away from the rotating base (8) and at an end of the second bottom horizontal brace rod (12) away from the rotating base (8).

## Patentansprüche

1. Schnell zusammenklappbares Gitterbettgestell, umfassend: einen ersten U-förmigen Umfassungsrahmen (1) und einen zweiten U-förmigen Umfassungsrahmen (2),
wobei ein erstes Umfassungsrahmen-Verbindungsstück (3) und ein zweites Umfassungsrahmen-Verbindungsstück (4), die einstückig ausgebildet sind, an jedem der hinteren Enden auf beiden Seiten des ersten U-förmigen Umfassungsrahmens (1) bzw. des zweiten U-förmigen Umfassungsrahmens (2) angeordnet sind, wobei das erste Umfassungsrahmen-Verbindungsstück (3) und das zweite Umfassungsrahmen-Verbindungsstück (4) auf jeder der beiden Seiten drehbar mit einem Verbindungsstück (5) für eine obere vertikale Stange (6) vernietet sind, wobei das Verbindungsstück (5) für die obere vertikale Stange (6) fest an einem oberen Ende einer oberen vertikalen Stange (6) angebracht ist, ein unteres Ende der oberen vertikalen Stange (6) verschiebbar in einen inneren Hohlraum einer unteren vertikalen Stange (7) eingesetzt ist, ein unteres Ende der unteren vertikalen Stange (7) fest in eine Drehbasis (8) eingesetzt ist, ein Ende einer ersten unteren horizontalen Verstrebungsstange (9) und ein Ende einer zweiten unteren horizontalen Verstrebungsstange (12) drehbar an einer Vorderseite bzw. einer Rückseite der Drehbasis (8) vernietet sind, ein Ende eines ersten unteren horizontalen Verstrebungsgestänges (11) und ein Ende eines zweiten unteren horizontalen Verstrebungsgestänges (10) drehbar an Innenwänden der ersten unteren horizontalen Verstrebungsstange (9) bzw. der zweiten unteren horizontalen Verstrebungsstange (12) vernietet sind, eine Schiebehülse (13) verschiebbar auf die untere vertikale Stange (7) aufgeschoben ist und sowohl das andere Ende des ersten unteren horizontalen Verstrebungsgestänges (11) als auch das andere Ende des zweiten unteren horizontalen Verstrebungsgestänges (10) drehbar mit der Schiebehülse (13) vernietet sind.

2. Schnell zusammenklappbares Gitterbettgestell nach Anspruch 1, mit Nietstiften (21) und Steckverriegelungsblöcken (14), wobei sowohl das erste Umfassungsrahmen-Verbindungsstück (3) als auch das zweite Umfassungsrahmen-Verbindungsstück (4) mittels eines der Nietstifte (21) drehbar mit dem oberen vertikalen Verbindungsstück (5) verbunden sind und jeder der Steckverriegelungsblöcke (14) trennbar an einem der Nietstifte (21) angebracht ist, um zwischen einem ersten Zustand und einem zweiten Zustand umgeschaltet zu werden;
in dem ersten Zustand verriegelt jeder der Steckverriegelungsblöcke (14) einen der Nietstifte (21), so dass das erste Umfassungsrahmen-Verbindungsstück (3), das zweite Umfassungsrahmen-Verbindungsstück (4) und das Verbindungsstück (5) für eine obere vertikale Stange (6) relativ zueinander fixiert sind und
im zweiten Zustand ist jeder der Steckverriegelungsblöcke (14) von einem der Nietstifte (21) getrennt, so dass das erste Umfassungsrahmen-Verbindungsstück (3) und das zweite Umfassungsrahmen-Verbindungsstück (4) relativ zu dem Verbindungsstück (5) für eine obere vertikale Stange (6) drehbar sind.

3. Schnell zusammenklappbares Gitterbettgestell nach Anspruch 2, ferner mit ersten Verriegelungsnasen (61), wobei jede der ersten Verriegelungsnasen (61) am oberen Ende der oberen vertikalen Stange (6) angeordnet ist, jede der ersten Verriegelungsnasen (61) einen Führungsraum (611) aufweist, durch den ein Ende eines der Steckverriegelungsblöcke (14) hindurchgeht, und jeder der Steckverriegelungsblöcke (14) mit einer der ersten Verriegelungsnasen (61) in Eingriff steht und somit im ersten Zustand durch die eine der ersten Verriegelungsnasen (61) verriegelt wird.

4. Schnell zusammenklappbares Gitterbettgestell nach einem der Ansprüche 1 bis 3, wobei eine Seitenwand der oberen vertikalen Stange (6) mit einem elastischen Verriegelungsvorsprung (60) versehen ist, eine Seitenwand der unteren vertikalen Stange (7) mit mindestens einem Verriegelungsloch (70) versehen ist, das mit dem inneren Hohlraum der unteren vertikalen Stange (7) in Verbindung steht, und der elastische Verriegelungsvorsprung (60) in dem mindestens einen Verriegelungsloch (70) verriegelt werden kann, so dass er zwischen einem dritten Zustand und einem vierten Zustand umgeschaltet werden kann;
im dritten Zustand ist der elastische Verriegelungsvorsprung (60) in eines der mindestens einen Verriegelungslöcher (70) eingepasst, so dass die obere vertikale Stange (6) relativ zur unteren vertikalen Stange (7) fixiert ist; und
im vierten Zustand ist der elastische Verriegelungsvorsprung (60) von dem einen der mindestens einen Verriegelungslöcher (70) gelöst, so dass die obere vertikale Stange (6) in dem inneren Hohlraum der unteren vertikalen Stange (7) verschiebbar ist.

5. Schnell zusammenklappbares Gitterbettgestell nach Anspruch 4, wobei eine Vielzahl von Verriegelungslöchern (70) vorgesehen ist, die Vielzahl von Verriegelungslöchern (70) in Längsrichtung der unteren vertikalen Stange (7) voneinander beabstandet angeordnet ist, und der elastische Verriegelungsvorsprung (60) so konfiguriert ist, dass er in verschiedene Verriegelungslöcher (70) eingepasst werden kann, um die Länge der Ausdehnung der oberen vertikalen Stange (6) aus dem inneren Hohlraum der unteren vertikalen Stange (7) zu ändern.

6. Schnell zusammenklappbares Gitterbettgestell nach einem der Ansprüche 1 bis 5, ferner umfassend ein Schiebehülsenverbindungsrohr (15), mindestens ein Schiebehülsenverriegelungselement (17) und mindestens einen Drehstift (18), wobei das Schiebehülsenverbindungsrohr (15) ein mit der Schiebehülse (13) verbundenes Ende aufweist, und das mindestens eine Schiebehülsenverriegelungselement (17) verschiebbar in das Schiebehülsenverbindungsrohr (15) eingesetzt ist, so dass ein Ende des mindestens einen Schiebehülsenverriegelungselements (17) in der Lage ist, sich von dem Schiebehülsenverbindungsrohr (15) zu erstrecken und durch die Schiebehülse (13) hindurchzugehen, um an der unteren vertikalen Stange (7) anzuliegen;
und wobei das Schiebehülsenverbindungsrohr (15) mit mindestens einem Durchgangsloch (170) versehen ist und der mindestens eine Drehstift (18) durch das Durchgangsloch (170) hindurchgeht und an dem mindestens einen Schiebehülsenverriegelungselement (17) anliegt, so dass das Schiebehülsenverbindungsrohr (15) und das mindestens eine Schiebehülsenverriegelungselement (17) relativ zueinander fixiert sind, wodurch die Schiebehülse (13) an der unteren vertikalen Stange (7) befestigt ist.

7. Schnell zusammenklappbares Gitterbettgestell nach Anspruch 6, wobei zwei untere vertikale Stangen (7) vorgesehen sind, wobei die beiden unteren vertikalen Stangen (7) voneinander beabstandet angeordnet sind, und zwei Enden des Schiebehülsenverbindungsrohrs (15) mit Schiebehülsen (13) verbunden sind, die jeweils auf den beiden unteren vertikalen Stangen (7) aufgeschoben sind;
und wobei zwei Schiebehülsenverriegelungselemente (17) vorgesehen sind, wobei die beiden Schiebehülsenverriegelungselemente (17) in dem Schiebehülsenverbindungsrohr (15) voneinander beabstandet angeordnet sind, eines der Schiebehülsenverriegelungselemente (17) an einer der unteren vertikalen Stangen (7) anliegt und das andere der Schiebehülsenverriegelungselemente (17) an der anderen der unteren vertikalen Stangen (7) anliegt.

8. Schnell zusammenklappbares Gitterbettgestell nach Anspruch 7, wobei eine Außenwand des Schiebehülsenverbindungsrohrs (15) mit Gleitschlitzen (151) versehen ist, die mit einem inneren Hohlraum des Schiebehülsenverbindungsrohrs (15) in Verbindung stehen, jedes der beiden Schiebehülsenverriegelungselemente (17) an seinem Ende in der Nähe der Gleitschlitze (151) mit einem Gleitvorsprung (171) versehen ist, und jeder der beiden Gleitvorsprünge (171) gleitend in einen der Gleitschlitze (151) eingreift, so dass die beiden Schiebehülsenverriegelungselemente (17) nahe zueinander oder voneinander weg bewegt werden.

9. Schnell zusammenklappbares Gitterbettgestell nach Anspruch 8, ferner umfassend ein Schiebehülsenentriegelungselement (16), wobei das Schiebehülsenentriegelungselement (16) drehbar auf das Schiebehülsenverbindungsrohr (15) aufgeschoben ist, das Schiebehülsenentriegelungselement (16) mit einem ersten Schlitzsegment (161) und einem zweiten Schlitzsegment (162) versehen ist, das erste Schlitzsegment (161) und das zweite Schlitzsegment (162) miteinander in Verbindung stehen, um einen trapezförmigen Schlitz zu bilden, und das erste Schlitzsegment (161) und das zweite Schlitzsegment (162) zu unterschiedlichen Zeiten mit den beiden Gleitvorsprüngen (171) versehen sind, so dass die beiden Schiebehülsenverriegelungselemente (17) nahe zueinander oder voneinander weg bewegt werden;
und wobei das Schiebehülsenentriegelungselement (16) so konfiguriert ist, dass es die beiden Gleitvorsprünge (171) so antreibt, dass sie von dem ersten Schlitzsegment (161) zu dem zweiten Schlitzsegment (162) oder von dem zweiten Schlitzsegment (162) zu dem ersten Schlitzsegment (161) gleiten, wenn sie sich relativ zu dem Schiebehülsenverbindungsrohr (15) drehen.

10. Schnell zusammenklappbares Gitterbettgestell nach einem der Ansprüche 1 bis 9, wobei an einer Innenwand eines oberen Endes der unteren vertikalen Stange (7) eine zweite angeformte Verriegelungsnase (71) angeordnet ist, wobei an einer Seitenwand der Schiebehülse (13) ein angeformter Entriegelungseinsatz (130) angeordnet ist, wobei der Entriegelungseinsatz (130) lösbar an der zweiten Verriegelungsnase (71) angebracht ist.

11. Schnell zusammenklappbares Gitterbettgestell nach einem der Ansprüche 1 bis 10, bei dem die beidseitigen Drehbasen (8) durch ein Bodengestänge (19) verbunden sind.

12. Schnell zusammenklappbares Gitterbettgestell nach einem der Ansprüche 1 bis 11, bei dem ein Universalrad (20) drehbar an jedem Ende der ersten unteren horizontalen Verstrebungsstange (9) entfernt von der Drehbasis (8) und an einem Ende der zweiten unteren horizontalen Verstrebungsstange (12) entfernt von der Drehbasis (8) angebracht ist.

## Revendications

1. Cadre de berceau à pliage rapide, comprenant : un premier cadre d'enceinte en forme de U (1) et un second cadre d'enceinte en forme de U (2), dans lequel
un premier connecteur de cadre d'enceinte (3) et un second connecteur de cadre d'enceinte (4), qui sont formés d'un seul tenant, sont agencés à chacune des extrémités arrière des deux côtés du premier cadre d'enceinte en forme de U (1) et du second cadre d'enceinte en forme de U (2), respectivement, le premier connecteur de cadre d'enceinte (3) et le second connecteur de cadre d'enceinte (4), sur chacun des deux côtés, sont chacun rivetés de manière rotative à un connecteur (5) de tige verticale supérieure (6), respectivement, dans lequel le connecteur (5) de tige verticale supérieure (6) est manchonné de manière fixe sur une extrémité supérieure d'une tige verticale supérieure (6), une extrémité inférieure de la tige verticale supérieure (6) est insérée de manière coulissante dans une cavité intérieure d'une tige verticale inférieure (7), une extrémité inférieure de la tige verticale inférieure (7) est insérée de manière fixe dans une base rotative (8), une extrémité d'une première tige d'entretoise horizontale inférieure (9) et une extrémité d'une seconde tige d'entretoise horizontale inférieure (12) sont respectivement rivetées de manière rotative sur un côté avant et un côté arrière de la base rotative (8), une l'extrémité d'une première liaison d'entretoise horizontale inférieure (11) et une extrémité d'une seconde liaison d'entretoise horizontale inférieure (10) sont rivetées de manière rotative aux parois internes de la première tige d'entretoise horizontale inférieure (9) et de la seconde tige d'entretoise horizontale inférieure (12), respectivement, un manchon coulissant (13) est manchonné de manière coulissante sur la tige verticale inférieure (7), et à la fois l'autre extrémité de la première liaison d'entretoise horizontale inférieure (11) et l'autre extrémité de la seconde liaison d'entretoise horizontale inférieure (10) sont reliées de manière rotative au manchon coulissant (13).

2. Cadre de berceau à pliage rapide selon la revendication 1, comprenant des broches de rivetage (21) et des blocs de verrouillage enfichables (14), dans lequel le premier connecteur de cadre d'enceinte (3) et le second connecteur de cadre d'enceinte (4) sont tous deux connectés de manière rotative au connecteur (5) de tige verticale supérieure (6) au moyen de l'une des broches de rivetage (21), et chacun des blocs de verrouillage enfichables (14) est ajusté de manière séparable à l'une des broches de rivetage (21), de manière à être commuté entre un premier état et un deuxième état ;
dans le premier état, chacun des blocs de verrouillage enfichables (14) verrouille l'une des broches de rivetage (21) de telle sorte que le premier connecteur de cadre d'enceinte (3), le second connecteur de cadre d'enceinte (4) et le connecteur (5) de tige verticale supérieure (6) soient fixés les uns par rapport aux autres ; et
dans le deuxième état, chacun des blocs de verrouillage enfichables (14) est séparé de l'une des broches de rivetage (21) de telle sorte que le premier connecteur de cadre d'enceinte (3) et le second connecteur de cadre d'enceinte (4) peuvent tourner par rapport au connecteur (5) de tige verticale supérieure (6).

3. Cadre de berceau à pliage rapide selon la revendication 2, comprenant en outre des premières pattes de verrouillage (61), dans lequel chacune des premières pattes de verrouillage (61) est agencée au niveau de l'extrémité supérieure de la tige verticale supérieure (6), chacune des premières pattes de verrouillage (61) présente un espace de guidage (611) à travers lequel une extrémité de l'un des blocs de verrouillage enfichables (14) passe, et chacun des blocs de verrouillage enfichables (14) est mis en prise avec l'une des premières pattes de verrouillage (61) et ainsi verrouillé par l'une des premières pattes de verrouillage (61) dans le premier état.

4. Cadre de berceau a pliage rapide selon l'une quelconque des revendications 1 à 3, dans lequel une paroi latérale de la tige verticale supérieure (6) est munie d'une saillie de verrouillage élastique (60), une paroi latérale de la tige verticale inférieure (7) est munie d'au moins un trou de verrouillage (70) communiquant avec la cavité interne de la tige verticale inférieure (7), et la saillie de verrouillage élastique (60) peut être verrouillée dans le au moins un trou de verrouillage (70), de manière à être commutée entre un troisième état et un quatrième état ;
dans le troisième état, la saillie de verrouillage élastique (60) est ajustée dans un du au moins un trou de verrouillage (70) de telle sorte que la tige verticale supérieure (6) est fixée par rapport à la tige verticale inférieure (7) ; et
dans le quatrième état, la saillie de verrouillage élastique (60) est libérée de l'un du au moins un trou de verrouillage (70) de telle sorte que la tige verticale supérieure (6) peut coulisser dans la cavité interne de la tige verticale inférieure (7).

5. Cadre de berceau à pliage rapide selon la revendication 4, dans lequel une pluralité de trous de verrouillage (70) sont prévus, la pluralité de trous de verrouillage (70) sont agencés espacés les uns des autres dans une direction de longueur de la tige verticale inférieure (7), et la saillie de verrouillage élastique (60) est configurée pour être ajustée dans différents trous de verrouillage (70), de manière à modifier une longueur d'extension de la tige verticale supérieure (6) à partir de la cavité interne de la tige verticale inférieure (7).

6. Cadre de berceau à pliage rapide selon l'une quelconque des revendications 1 à 5, comprenant en outre un tube de connexion de manchon coulissant (15), au moins un élément de verrouillage de manchon coulissant (17) et au moins une broche rotative (18), dans lequel le tube de connexion de manchon coulissant (15) présente une extrémité connectée au manchon coulissant (13), et le au moins un élément de verrouillage de manchon coulissant (17) est inséré de manière coulissante dans le tube de connexion de manchon coulissant (15), de sorte qu'une extrémité du au moins un élément de verrouillage de manchon coulissant (17) peut s'étendre depuis le tube de connexion de manchon coulissant (15) et passer à travers le manchon coulissant (13) pour venir en butée contre la tige verticale inférieure (7) ; et
le tube de connexion de manchon coulissant (15) est muni d'au moins un trou traversant (170), et la au moins une broche rotative (18) passe à travers le trou traversant (170) et vient en butée contre le au moins un élément de verrouillage de manchon coulissant (17), de sorte que le tube de connexion de manchon coulissant (15) et le au moins un élément de verrouillage de manchon coulissant (17) sont fixés l'un par rapport à l'autre, moyennant quoi le manchon coulissant (13) est fixé à la tige verticale inférieure (7).

7. Cadre de berceau à pliage rapide selon la revendication 6, dans lequel deux tiges verticales inférieures (7) sont prévues, les deux tiges verticales inférieures (7) sont agencées espacées l'une de l'autre, et deux extrémités du tube de connexion de manchon coulissant (15) sont connectées à des manchons coulissants (13) manchonnés sur les deux tiges verticales inférieures (7), respectivement ; et
deux éléments de verrouillage de manchon coulissant (17) sont prévus, les deux éléments de verrouillage de manchon coulissant (17) sont agencés espacés l'un de l'autre dans le tube de connexion de manchon coulissant (15), l'un des éléments de verrouillage de manchon coulissant (17) vient en butée contre l'une des tiges verticales inférieures (7), et l'autre des éléments de verrouillage de manchon coulissant (17) vient en butée contre l'autre des tiges verticales inférieures (7).

8. Cadre de berceau à pliage rapide selon la revendication 7, dans lequel une paroi externe du tube de connexion de manchon coulissant (15) est munie de fentes de coulissement (151) communiquant avec une cavité interne du tube de connexion de manchon coulissant (15), chacun des deux éléments de verrouillage de manchon coulissant (17) est muni, à son extrémité proche des fentes de coulissement (151), d'une saillie coulissante (171), et chacune des deux saillies coulissantes (171) est mise en prise de manière coulissante dans l'une des fentes de coulissement (151), de sorte que les deux éléments de verrouillage de manchon coulissant (17) sont rapprochés ou éloignés l'un de l'autre.

9. Cadre de berceau à pliage rapide selon la revendication 8, comprenant en outre un élément de déverrouillage de manchon coulissant (16), dans lequel l'élément de déverrouillage de manchon coulissant (16) est manchonné de manière rotative sur le tube de connexion de manchon coulissant (15), l'élément de déverrouillage de manchon coulissant (16) est muni d'un premier segment de fente (161) et d'un second segment de fente (162), le premier segment de fente (161) et le second segment de fente (162) communiquent l'un avec l'autre pour former une fente trapézoïdale, et le premier segment de fente (161) et le second segment de fente (162) sont ajustés avec les deux saillies coulissantes (171) à un moment différent, de sorte que les deux éléments de verrouillage de manchon coulissant (17) sont rapprochés ou éloignés l'un de l'autre ; et
l'élément de déverrouillage de manchon coulissant (16) est configuré pour entraîner les deux saillies coulissantes (171) à coulisser du premier segment de fente (161) au second segment de fente (162) ou du second segment de fente (162) au premier segment de fente (161) lors d'une rotation par rapport au tube de connexion de manchon coulissant (15).

10. Cadre de berceau à pliage rapide selon l'une quelconque des revendications 1 à 9, dans lequel une seconde patte de verrouillage (71) formée d'un seul tenant est agencée sur une paroi intérieure d'une extrémité supérieure de la tige verticale inférieure (7), un insert de déverrouillage (130) formé d'un seul tenant est agencé sur une paroi latérale du manchon coulissant (13), dans lequel l'insert de déverrouillage (130) est ajusté de manière séparable par rapport à la seconde patte de verrouillage (71).

11. Cadre de berceau à pliage rapide selon l'une quelconque des revendication s 1 à 10, dans lequel les bases rotatives (8) des deux côtés sont connectées par une liaison inférieure (19).

12. Cadre de berceau à pliage rapide selon l'une quelconque des revendications 1 à 11, dans lequel une roue universelle (20) est montée de manière rotative à chacune d'une extrémité de la première tige d'entretoise horizontale inférieure (9) éloignée de la base rotative (8) et d'une extrémité de la seconde tige d'entretoise horizontale inférieure (12) éloignée de la base rotative (8).
